# FASCICULE DE BREVET EUROPEEN

(11) **EP 0 657 132 B1**
(45) Date de publication et mention de la délivrance du brevet: **14.07.1999**
(21) Numéro de dépôt: 94420350.4
(22) Date de dépôt: 09.12.1994
(51) Int. Cl.: A47J 37/06

(54) **Structure et agencement de pièces constitutives d'un gril-viande à coque plastique**
Form und Anordnung der Bauelemente eines Fleischgrillgerätes mit Kunststoffgehäuse
Construction and assembly of elements forming a meat grilling device having a plastic housing

(30) Priorité: 10.12.1993 FR 9315131
(43) Date de publication de la demande: 14.06.1995
(73) Titulaire: SEB S.A., 69130 Ecully (FR)
(72) Inventeur: Klinger, Michel, F-68140 Stosswihr (FR); Thiriat, Sylvain, F-88200 Remiremont (FR); Perrin, Jean-François, F-88200 Dommartin les Remiremont (FR); Milliot, Françis, F-88200 Remiremont (FR)

(56) Documents cités:
- AU-B- 627 142
- FR-A- 2 302 067
- FR-A- 2 400 302
- GB-A- 2 140 672
- US-A- 2 040 369
- US-A- 4 862 795
- PATENT ABSTRACTS OF JAPAN vol. 15, no. 86 (E-1039) 28 Février 1991 & JP-A-02 301 968 (MATSUSHITA ELECTRIC IND CO) 14 Décembre 1990

## Description

La présente invention concerne l'utilisation de pièces et d'éléments spécifiques pour la réalisation d'appareils du type gril-viande ou gaufrier ainsi qu'un agencement ou montage particulier desdits éléments pour obtenir une maitrise parfaite des flux thermiques. L'invention s'applique au domaine des appareils à griller constitués d'un bâti par exemple en matériau non métallique et plus particulièrement au domaine des appareils dissipant une puissance thermique importante tels que des gril-viande. Il est évident que l'invention ne se limite pas à des gril-viande et que tout appareil destiné à la cuisson d'aliments peut être concerné par l'objet de la présente invention.

Il est déjà connu, comme cela est décrit dans le brevet US-4762058, de réaliser un gril-viande dont le bâti présente une structure plastique ne résistant pas à des températures de chauffe élevées. Ce brevet décrit un gril-viande présentant deux plaques de cuisson destinées à cuire un morceau de viande sur sa surface supérieure et inférieure. Pour assurer un meilleur transfert thermique des plaques de cuisson vers le morceau de viande, les plaques de cuisson exercent une pression mécanique sur ledit morceau de viande par l'intermédiaire d'un ressort agencé sur le bâti. En outre l'appareil décrit dans ce document, comporte une ceinture d'eau destinée à étanchéifier la chambre de cuisson et à permettre une cuisson dans une atmosphère saturée en vapeur d'eau. La pression mécanique exercée par les plaques de cuisson sur l'article à griller ainsi que l'atmosphère saturée en vapeur d'eau permettent ainsi de réduire le temps de cuisson d'une part et de diminuer la température de cuisson d'autre part. L'utilisation d'un matériau plastique à faible coût pour la réalisation du bâti de l'appareil à griller est alors possible. L'appareil à griller présente néanmoins un certain nombre de désavantages qui ne peuvent satisfaire l'utilisateur. En effet, pour diminuer l'inertie et les pertes thermiques, l'appareil décrit dans ce document a recours à des solutions telles qu'une atmosphère saturée en vapeur d'eau et une pression mécanique sur l'article à griller, augmentant ainsi la difficulté de conception et le coût de fabrication d'un tel appareil.

L'objet de la présente invention est de fournir à l'utilisateur un appareil à griller comportant un bâti, en matériau plastique, dans lequel les flux thermiques sont maitrisés et utilisés de manière optimale d'une part et les pertes thermiques réduites d'autre part, pour optimiser la cuisson ou les cuissons successives de plusieurs articles sans avoir recours à une atmosphère de cuisson saturée en vapeur d'eau ou à des matériaux résistants à de très hautes températures.

Un autre objet de la présente invention est d'optimiser le transfert du flux thermique en utilisant des matériaux dont l'émissivité par rapport au rayonnement infrarouge est plus ou moins grande, en fonction de l'agencement des pièces constituantes de l'appareil à griller.

Un autre objet de la présente invention est de faciliter le montage/démontage de différentes pièces et notamment des plaques de cuisson de l'appareil à griller pour faciliter leur nettoyage après une ou plusieurs phases de cuisson.

Un autre objet de la présente invention est de faciliter le transfert de l'énergie thermique vers les articles à griller tout en réduisant l'inertie thermique que présente ledit appareil à griller conforme à l'invention.

Un autre objet de la présente invention est de limiter la montée en température dudit appareil lors de la cuisson, de manière à pouvoir utiliser notamment un matériau plastique de faible coût pour réaliser le bâti de l'appareil conforme à l'invention.

Un objet supplémentaire de la présente invention est de réduire le nombre de pièces constituant ledit appareil et par conséquent d'en réduire le coût de fabrication d'une part et les difficultés de fabrication ou de construction d'autre part.

Les objets assignés à l'invention sont atteints à l'aide d'un appareil à griller ou à cuire comportant un bâti en matériau plastique, au moins une plaque de cuisson amovible sur laquelle repose l'article à griller, au moins un élément chauffant, au moins un réflecteur thermique pour réfléchir vers la plaque de cuisson les rayonnements infrarouges émis par l'élément chauffant, ainsi qu'un capteur thermique destiné à la régulation en température dudit appareil,
caractérisé en ce qu'une cuve métallique est agencée sur le bâti pour d'une part supporter le réflecteur thermique, la plaque de cuisson et l'élément chauffant et pour d'autre part réaliser avec le réflecteur thermique et le bâti, un emboîtement dans lequel le réflecteur thermique s'étend dans le volume interne défini par la cuve, laquelle réalise un réflecteur thermique supplémentaire, fixé sur le bâti à l'aide de moyens thermorésistants et établissant des contacts mécaniques ponctuels avec la plaque de cuisson et avec le réflecteur thermique à l'aide respectivement de pièces de liaison flexibles et moyens de fixation du type mâle/femelle.

Les caractéristiques et avantages de l'invention ressortiront mieux à la lecture de la description donnée ci-après à titre d'exemple non limitatif en référence aux dessins annexés dans lesquels :
- la figure 1 représente une vue éclatée et en perspective de l'ensemble constituant l'appareil à griller conforme à l'invention,
- la figure 2 représente selon une vue de dessus un exemple de réalisation de l'agencement d'un réflecteur sur une cuve conforme à l'invention,
- la figure 3 représente une vue partielle en coupe de l'ensemble constituant la partie chaude de l'appareil à griller conforme à l'invention.
- la figure 4 représente une vue de dessus d'une plaque de cuisson de l'appareil à griller conforme à l'invention.

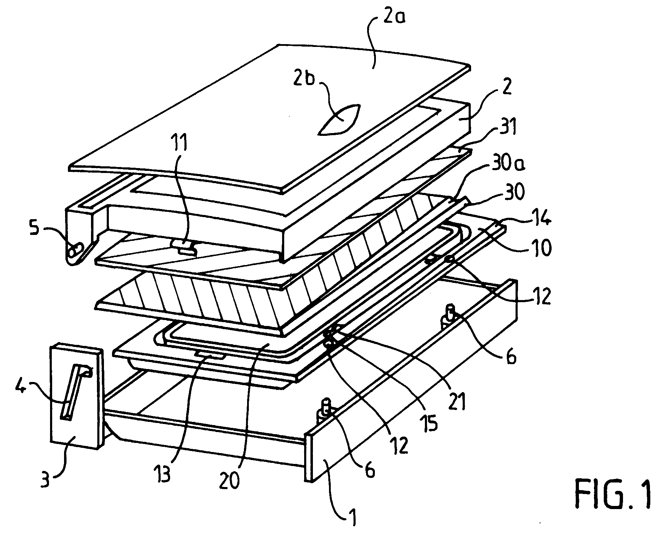

Dans la réalisation conforme à l'invention représentée à la figure 1, l'appareil à griller comporte un bâti, en matériau plastique, une cuve 10, au moins une plaque de cuisson 30 ainsi qu'un réflecteur thermique 20. Le bâti comporte une partie inférieure 1 sur laquelle est agencée la plaque de cuisson 30 et une partie supérieure 2 sur laquelle est agencée une plaque de cuisson 31, ladite partie supérieure 2 étant rabattable sur la partie inférieure 1. Avantageusement le bâti est constitué d'un matériau plastique à base de polypropylène.

L'appareil à griller conforme à l'invention est constitué de deux parties rabattables l'une sur l'autre par l'intermédiaire d'une charnière par exemple ou tout autre moyen pivotant du type articulation permettant de ramener la partie supérieure 2 vers la partie inférieure 1. Le moyen pivotant est obtenu par exemple en ménageant une rainure 4 dans un montant 3 de la partie inférieure 1 et par l'agencement d'une tige 5 sur la partie supérieure 2, ladite tige 5 venant glisser dans la rainure 4. La rainure 4 et la tige 5 sont disposés respectivement sur la partie inférieure 1 et la partie supérieure 2 de part et d'autre de ce qui constitue l'arrière de l'appareil à griller, de manière à autoriser un pivotement de la partie supérieure 2 sur la partie inférieure 1. La rainure 4 présente des dimensions suffisantes afin de donner à la tige 5 une course libre dans ladite rainure 4. Ainsi l'appareil à griller comportant la partie supérieure 2 rabattue ou refermée sur la partie inférieure 1 peut se trouver dans différentes positions de fermeture correspondant à des écartements différents des plaques de cuisson 30 et 31. Ceci est particulièrement avantageux lors de cuisson d'articles à griller d'épaisseur différentes ou inégales. Il est clair que le moyen pivotant du type d'articulation utilisé, se retrouve de part et d'autre sur les côtés latéraux de l'appareil à griller. Lors du grillage ou de la cuisson d'un article à griller présentant une épaisseur inégale, la partie inférieure 1 et la partie supérieure 2, de même que les plaques de cuisson 30 et 31, ne sont plus parallèles, mais lesdites plaques de cuisson 30 et 31 s'appliquent de manière continue sur les faces de l'article à griller pour assurer un bon transfert thermique.

La cuve 10, de préférence métallique, est fixée ou agencée sur le bâti par l'intermédiaire d'entretoises 6 réalisées, par exemple en plastique technique hautes températures, ou tout autre matériau résistant à des températures élevées, ou réfractaire.

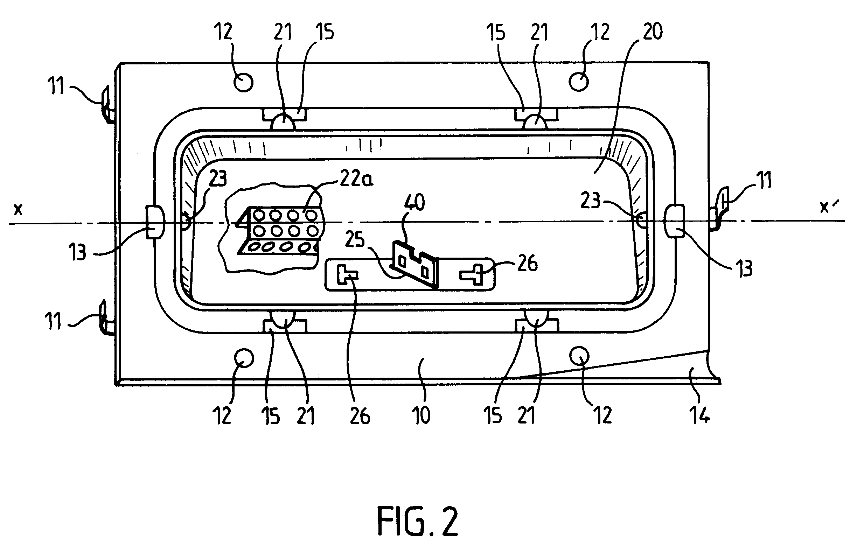

La cuve 10 représentée à la figure 2 comporte également des orifices 12 dans lesquels viennent s'introduire ou s'encastrer les entretoises 6 lors du montage de la cuve 10 dans la partie inférieure 1. La cuve 10 peut être solidarisée avec la partie inférieure 1 mécaniquement ou chimiquement par collage en utilisant par exemple une colle résistant à des températures élevées. Le nombre d'entretoises 6 et d'orifices 12 est au minimum égal à 3 et de préférence égal à 4. Les points de fixation ainsi réalisés sont répartis sur la périphérie de la cuve 10 et de la partie inférieure 1 de manière à obtenir un positionnement stable de ladite cuve 10 sur la partie inférieure 1. La cuve 10 présente également deux ouvertures 13 de part et d'autre de la cuve 10 et centrées sur un axe de symétrie x-x' de ladite cuve 10 pour le positionnement d'un élement chauffant, lequel repose sur la cuve 10. Les éléments chauffants utilisés dans l'appareil à griller sont constitués d'un tube réfractaire sur lequel ou dans lequel est agencé un filament résistif, lesdits éléments chauffants étant supportés par la cuve 10. Selon une variante de réalisation des éléments chauffants utilisés, les tubes réfractaires comportent un bobinage résistif interne et externe.

Selon une autre variante de réalisation de l'appareil conforme à l'invention, au moins deux éléments chauffants sont agencés dans la cuve 10. Le réflecteur 20 comporte de préférence un diffuseur 22a pour protéger l'élément chauffant comportant un filament résistif accessible et non isolé électriquement. Le diffuseur 22a utilisé dans ce cas est une cage métallique munie d'un grand nombre d'orifices pour ne pas altérer le transfert thermique.

La cuve 10 est par exemple réalisée à partir d'un matériau métallique quelconque, mais pour réfléchir les rayonnements infrarouges ou thermiques ladite cuve 10 est réalisée de préférence en aluminium ou en tôle d'acier, laquelle est revêtue d'une couche d'aluminium. De manière complémentaire, le matériau constitutif du réflecteur thermique 20, présente une émissivité plus faible ou égale à l'émissivité du matériau constitutif de la cuve 10 vis à vis du rayonnement infrarouge. En effet, l'utilisation d'un matériau moins noble n'altère pas la maîtrise des flux thermiques rayonnés, sachant qu'une part importante desdits rayonnements sont réfléchis par le rélfecteur thermique 20.

Avantageusement le réflecteur thermique 20 est réalisé d'aluminium et présente une épaisseur inférieure ou égale à 0.6 millimètre.

Selon une variante de réalisation de l'appareil conforme à l'invention, le réflecteur thermique 20 est constitué d'un assemblage d'une tôle d'acier prise en sandwich entre deux tôles d'aluminium. L'une ou l'autre de ces conceptions procure audit réflecteur 20 des propriétés réfléchissantes intéressantes.

La cuve 10, outre son rôle de support et de pièce intermédiaire entre le réflecteur thermique 20 et la partie inférieure 1, est utilisée comme deuxième réflecteur thermique. Le réflecteur thermique 20 est constitué d'un matériau dont le coefficient d'absorbtion est de préférence très faible pour limiter le transfert thermique par rayonnement et par conduction vers la cuve 10.

Les interfaces de la cuve 10 et du réflecteur thermique 20 ainsi que de la cuve 10 et de la plaque de cuisson 30 sont obtenues respectivement par des moyens de fixation du type mâle/femelle et par des pièces de liaison 11. Les moyens du type mâle/femelle sont constitués de fentes 15 et d'ergots 21 et les pièces de liaison 11 sont constituées de pièces flexibles solidaires de la cuve 10.

Les pièces de liaison 11 flexibles sont fixées et réparties sur la périphérie de la cuve 10 pour réaliser une fixation mécanique stable de la plaque de cuisson 30 sur la cuve 10.
Les ergots 21 sont répartis sur la périphérie externe du réflecteur thermique 20 et les fentes 15 sont ménagées dans la cuve 10 pour recevoir les ergots 21 lors de la mise en place du réflecteur thermique 20 sur la cuve 10.

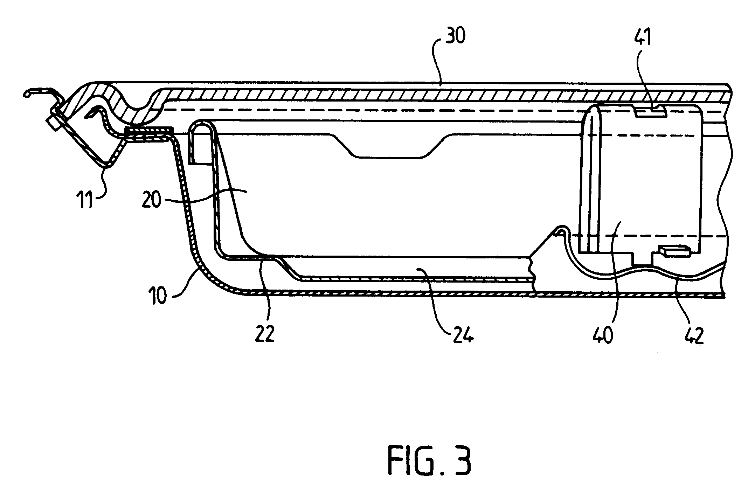

Les pièces de liaison 11, également métalliques soutiennent la plaque de cuisson 30 et exercent sur ladite plaque de cuisson 30 une force mécanique obtenue par l'élasticité des pièces de liaison 11. Le contact entre une pièce de liaison 11 et la plaque de cuisson 30 est limité à une faible surface, de manière à réduire au maximum l'échange thermique par conduction entre ladite plaque de cuisson 30 et la pièce de liaison 11 et par conséquent la cuve 10. Le pont thermique entre la cuve 10 et la plaque de cuisson 30 est d'autant plus faible que les dimensions des pièces de liaison 11, qui sont de préférence au nombre de 4, sont réduites. Les pièces de liaison 11 sont fixées sur la cuve 10 par tous moyens connus et plus particulièrement sur la périphérie de ladite cuve 10 et réalisent l'interface entre ladite cuve 10 et les plaques de cuisson 30 et 31. Le réflecteur thermique 20 représenté aux figures 2 et 3 est de préférence réalisé en aluminium ou tout autre matériau réfléchissant les rayonnements infrarouges.

Avantageusement le réflecteur thermique 20 se présente également sous forme de cuve ou contenant, fixé à l'intérieur de la cuve 10 en divers points de contact, de manière à limiter le transfert thermique du réflecteur thermique 20 vers la cuve 10. Les points de contact sont réalisés par exemple par 3 ou 4 ergots 21 métalliques agencés ou soudés sur le réflecteur thermique 20 et se logeant dans les fentes 15 prévues à cet effet dans la cuve 10.

La partie supérieure 2 comporte également une cuve 10, un réflecteur thermique 20 et une plaque de cuisson 31, agencés de manière identique ou similaire à l'agencement desdits éléments dans la partie inférieure 1.

La partie supérieure 2 comporte également un couvercle 2a muni d'une poignée 2b, facilitant la préhension de ladite partie supérieure 2 lors d'une fermeture ou ouverture de l'appareil à griller.

Avantageusement la cuve 10 dans la partie inférieure 1 ou supérieure 2 présente au moins 3 fentes 15 destinées à positionner et à supporter le réflecteur thermique 20.

Les fentes 15 de la cuve 10 peuvent être obtenues par exemple par emboutissage. Les ergots 21 se présentent sous forme de bras verticaux, lesquels peuvent s'enfoncer dans les fentes 15, d'une part et sont positionnés sur les parois latérales du réflecteur thermique 20 de manière à ce qu'un fond 22 du réflecteur thermique 20 ne vienne pas en contact avec la cuve 10. L'espace libre ainsi obtenu entre le réflecteur thermique 20 et la cuve 10, excepté aux points de contact définis par les ergots 21 et les fentes 15 assure l'isolation thermique nécessaire pour réduire de manière optimale les pertes thermiques par conduction. En outre le réflecteur thermique 20 présente deux ouvertures 23 dans lesquelles passe l'élement chauffant soutenu ou supporté par les orifices 13 de la cuve 10. La majeure partie du réflecteur thermique 20 ne se trouve donc pas en contact avec la cuve 10. Selon une variante de réalisation du réflecteur thermique 20, ce dernier comporte une gorge 24 pourvue dans le fond 22, ladite gorge 24 étant destinée à recevoir un élément chauffant, non représenté aux figures. Le fond 22 présente également une fente 25 par laquelle émerge un support 40 d'un capteur thermique. Le support 40 représenté aux figures 2 et 3 est une languette traversant le fond 22 du réflecteur thermique 20 par la fente 25. Le support 40 est réalisé à partir d'une languette métallique rectangulaire d'épaisseur suffisamment limitée pour permettre un pliage de ladite languette sur elle-même. Avantageusement le support 40 est une languette en aluminium, mais d'autres matériaux du type céramique, silicone ou plastique technique hautes températures peuvent convenir. Le support 40 présente une cavité 41 dans laquelle est agencé le capteur thermique, en regard de la plaque de cuisson 30.

Selon une variante de réalisation de l'appareil conforme à l'invention, le capteur thermique est agencé dans un volume interne, d'une partie du support 40 en regard avec la plaque de cuisson 30. Le volume interne non représenté aux figures, réalisé mécaniquement par tout moyen connu et notamment par emboutissage, permet de protéger le capteur thermique de chocs ou d'usures éventuelles. L'épaisseur de la couverture métallique ainsi obtenue entre le capteur thermique et la plaque de cuisson 30, est choisie de manière à ne pas altérer sensiblement les performances dudit capteur thermique. L'épaisseur de la couverture métallique ne dépasse pas 1 millimètre de préférence.

Le support 40 est lié mécaniquement à un moyen élastique ou flexible du type lame élastique 42, lequel permet au support 40 de se déplacer élastiquement dans au moins une direction.

La lame élastique 42 présentant une raideur suffisante pour positionner ou caler élastiquement le support 40, dans sa zone extrème supérieure, contre la plaque de cuisson 30. La lame élastique 42 est de préférence montée sur le réflecteur thermique 20 par l'intermédiaire d'une encoche 26 de part et d'autre de la fente 25 et s'étend entre la cuve 10 et le réflecteur thermique 20 au voisinage de la fente 25. Les extrémités de la lame élastique 42 viennent se fixer dans lesdites encoches 26 par tous moyens connus. Ainsi le support 40 est mobile élastiquement dans au moins une direction. Selon une variante de réalisation de l'appareil à griller conforme à l'invention le fond 22 présente une surélévation au voisinage d'une fente 25, ce qui permet de ménager un espace libre plus important entre le fond de la cuve 10 et le fond 22 du réflecteur thermique 20. Ainsi la lame élastique 42 s'étend dans l'espace libre délimité par la surélévation au voisinage de la fente 25.

En outre selon une variante de réalisation préférentielle de l'appareil à griller conforme à l'invention, les plaques de cuisson 30, 31 sont amovibles. De cette manière lorsque la plaque de cuisson 30 n'est pas mise en place, la lame élastique 42 positionne le support 40 en position extrème haute. Le support 40 est repoussé vers le bas lorsque la plaque de cuisson 30 est mise en place. Ceci est possible grâce à l'utilisation d'une lame élastique 42 soumise à une torsion et/ou une compression lors du mouvement vers le bas dudit support 40. Une fois mise en place la plaque de cuisson 30 maintient de manière stable le support 40 par la pression qu'elle exerce sur ce dernier. La cavité 41, par exemple se trouve donc constamment à la même distance de la plaque de cuisson 30.

Le capteur thermique est disposé dans la cavité 41 ménagée dans une partie du support 40 en regard avec la plaque de cuisson 30. Le capteur thermique peut selon une variante de réalisation être en contact direct avec la plaque de cuisson 30. Avantageusement le capteur thermique est en contact avec la plaque de cuisson 30 par l'intermédiaire d'une couche ou gaine isolante électrique entourant ledit capteur thermique. La couche ou gaine isolante électrique entourant le capteur thermique est constituée de polytétrafluoroéthylène par exemple, présentant une épaisseur de quelques dixièmes de millimètres et de préférence de 1 dixième de millimètre. Selon une autre variante de réalisation de l'appareil à griller conforme à l'invention, la plaque de cuisson 30 présente un logement, non représenté aux figures, destiné à recevoir et positionner le support 40. Ainsi la partie supérieure extrème du support 40, en regard de la plaque de cuisson 30, s'introduit légèrement dans ce logement.

Le capteur thermique est constitué d'une résistance thermo-variable du type résistance CTN logée et maintenue dans l'ambiance thermique de la plaque de cuisson 30 par l'intermédiaire du support 40 pour être soumis principalement au flux thermique direct issu de la plaque de cuisson 30.

La faible taille du capteur thermique, comme celle d'une résistance CTN, par exemple, logée dans la cavité 41 d'une part, et en regard de la plaque de cuisson 30 d'autre part permet au capteur thermique d'être protégé au moins partiellement des rayonnements infrarouges émis directement par les éléments chauffants ou réfléchis par le réflecteur thermique 20. Le capteur thermique est donc soumis pincipalement au flux thermique direct issu de la plaque de cuisson 30. Le flux thermique direct doit être entendu comme le flux rayonné et conduit ne provenant pas, dans une proportion prépondérante, du réflecteur thermique 20 et/ou des éléments chauffants directement.

Avantageusement, les plaques de cuisson 30 et 31 sont recouvertes d'une couche de forte émissivité du type polytétrafluoroéthylène sur la surface en regard des éléments chauffants et du réflecteur thermique 20. Les plaques de cuisson 30 et 31 sont en aluminium et présentent une épaisseur inférieure ou égale à 2,5 millimètres.

Les plaques de cuisson 30, 31 sont recouvertes sur les surfaces en regard des éléments chauffants, d'une couche de matériau de forte émissivité vis à vis du rayonnement thermique émis par lesdits éléments chauffants.

La plaque de cuisson 30 ou 31 est réalisée de préférence à partir d'aluminium ou d'un assemblage aluminium-acier-aluminium dont l'épaisseur ne dépasse pas 2,5 millimètres de préférence et dont la face, en regard des éléments chauffants est recouverte d'une couche de polytétrafluoroéthylène par exemple, d'une épaisseur de quelques micromètres et de préférence de 20 à 50 micromètres, pour augmenter le coefficient d'absorbtion du rayonnement de ladite plaque de cuisson 30 ou 31. Ces dernières absorbent le flux thermique issu des éléments chauffants et du réflecteur thermique 20 et le restitue rapidement aux articles à griller.

Selon une variante de réalisation de l'appareil conforme à l'invention, les plaques de cuisson 30 et 31 sont recouvertes d'une couche ou d'un dépôt chimique quelconque améliorant l'absorption et par conséquent l'émissivité desdites plaques de cuisson 30 et 31. La faible épaisseur de la plaque de cuisson 30 ou 31, c'est à dire sa faible inertie thermique, contribue en association avec des moyens de régulation et/ou de contrôle de température, à réaliser un appareil à griller à rendement optimisé. L'appareil à griller conforme à l'invention n'utilise plus, au cours de son fonctionnement, une énergie thermique emmagasinée ou stockée dans des plaques de cuisson 30 et 31.

A ce titre, l'épaisseur des plaques de cuisson 30 et 31 est conditionnée uniquement par la rigidité mécanique nécessaire desdites plaques de cuisson 30 et 31.

Ainsi l'article à griller, à rotir ou à cuire se trouve emprisonné entre deux plaques de cuisson 30 et 31. Les plaques de cuisson 30 et 31 sont évidemment fixées sur la cuve 10 par l'intermédiaire des pièces de liaison 11, ce qui permet de maintenir ladite plaque de cuisson 30 solidaire de la cuve 10 et par conséquent de la partie inférieure 1 ainsi que de maintenir en position de régulation le support 40 et le capteur thermique. La pièce de liaison 11 est sensiblement élastique ou flexible de manière à permettre à l'utilisateur de l'appareil à griller de désolidariser la plaque de cuisson 30 ou 31 dudit appareil à griller pour la nettoyer. Lors de la remise en place de la plaque de cuisson 30, laquelle est de préférence ondulée, le capteur thermique revient dans une position idéale sous la plaque de cuisson 30 par l'intermédiaire de la lame élastique 42 exercant une pression élastique sur le support 40. Les degrés de liberté, du type rotations, du support 40 obtenus par une fente 25 suffisamment large permettent ainsi d'utiliser dans un appareil à griller conforme à l'invention des plaques de cuisson 30 de structure ou de forme externe différente. Le capteur thermique sera quoi qu'il arrive toujours amené dans une position idéale de régulation de la température de ladite plaque de cuisson 30.

Avantageusement, un limiteur thermique est agencé sur l'extérieur de la cuve 10 de la partie supérieure 2 de l'appareil à griller pour maintenir la température de ladite cuve 10 en deçà du seuil thermique toléré par le bâti, réalisé par exemple en matériau plastique de faible coût, du type polypropylène. Le limiteur thermique constitue donc un moyen de sécurité supplémentaire, lequel coupe l'alimentation électrique des élements chauffants lorsque la température de la cuve 10 dépasse par exemple 250° Celcius. Avantageusement la distance entre la partie supérieure 2 ou inférieure 1 et les pièces métalliques de l'appareil à griller conforme à l'invention est au moins égale à 2 millimètres pour éviter tout risque de contact direct.

Le capteur thermique constitué de préférence d'une résistance électrique thermovariable du type résistance CTN est en contact avec la plaque de cuisson 30 par l'intermédiaire d'une couche ou gaine isolante électrique et thermiquement résistante entourant ledit capteur thermique. Selon une variante de réalisation de l'appareil conforme à l'invention, la gaine isolante électrique ne recouvre que les fils électriques reliés à la résistance CTN, laquelle étant recouverte intrinsèquement d'un matériau isolant électrique. Le capteur thermique est en contact thermique avec au moins une plaque de cuisson 30 ou 31.

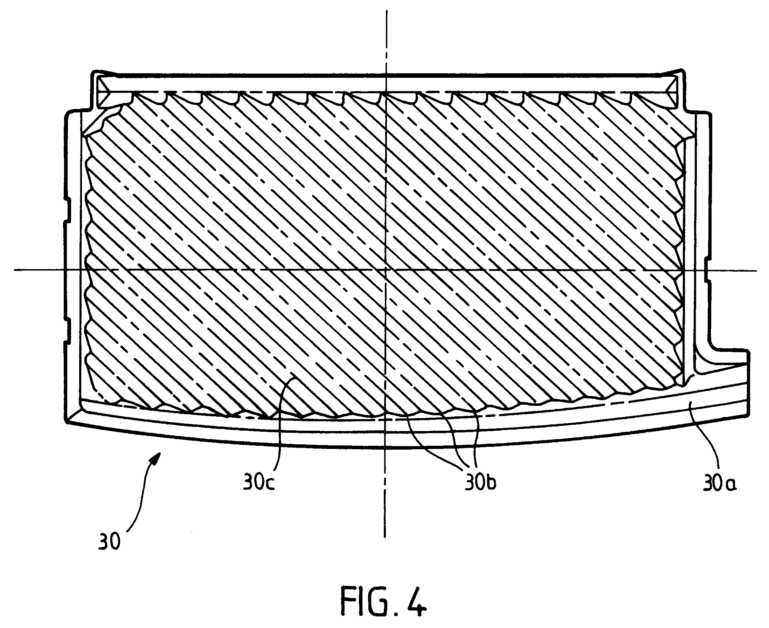

En effet l'appareil à griller conforme à l'invention est de manière avantageuse réalisée en deux parties rabattables l'une sur l'autre pour griller, cuire ou rotir sur deux faces différentes. Le capteur thermique sera alors en contact avec la plaque de cuisson 30 inférieure, de préférence, car c'est sur cette dernière que stagnent ou s'écoulent de l'eau et de la graisse issues de la cuisson, ce qui influence fortement la régulation en température de la cuisson. Le capteur thermique est une résistance CTN entourée ou enveloppée dans une couche ou gaine isolante électrique et thermiquement résistante. Le matériau avec lequel la résistance CTN est entourée est de préférence du polytétrafluoroéthylène. La taille réduite d'une résistance CTN permet ainsi de réaliser un capteur thermique de très faible inertie thermique. Un tel capteur thermique donne une image fidèle et instantanée de la température de la plaque de cuisson 30. La présence de liquides sur la plaque de cuisson 30 peut effectivement altérer le bon fonctionnement de l'appareil à griller, car une quantité d'énergie thermique importante est nécessaire pour évaporer lesdits liquides et surtout pour les faire passer d'une phase liquide vers une phase vapeur, ce qui provoque une perte thermique importante. Il est donc souhaitable d'incliner légèrement les plaques de cuisson 30 et 31 avec une inclinaison de l'ordre de 7 degrés afin de favoriser un écoulement rapide des liquides et jus issus de l'article à griller, notamment dans des creux 30b d'ondulations 30c, que peut présenter la plaque de cuisson 30. Ainsi, au moins la plaque de cuisson 30 est inclinée par construction dudit appareil par rapport à une direction horizontale pour évacuer les jus issus de la cuisson. Il peut être envisagé de donner à ces ondulations 30c une configuration telle, que les écoulements convergent ou se dirigent vers une rigole d'écoulement 30a, représentée a la figure 4 et réalisée sur la plaque de cuisson 30 inférieure et débouchant vers l'extérieur de l'appareil à griller. La cuve 10 présente à ce titre une gorge 14 épousant sensiblement la forme de la rigole d'écoulement 30a réalisée sur la plaque de cuisson 30. Dans une utilisation comme graufrier de l'appareil conforme à l'invention, l'inclinaison des plaques de cuisson est compensée par tous moyens mécaniques connus.

Il peut être envisagé selon une variante de réalisation de l'appareil à griller conforme à l'invention d'utiliser des éléments chauffants de puissance thermique différente dans les parties inférieure et supérieure de l'appareil à griller, pour compenser les phénomènes de changement de phase sur la plaque de cuisson 30 inférieure sur laquelle repose l'article à griller.

En outre, le capteur thermique lequel est entouré d'une couche isolante électrique, est associé à un circuit électronique de régulation et/ou de contrôle pour commander l'alimentation électrique des éléments chauffants.

Selon une autre variante de réalisation de l'appareil à griller conforme à l'invention, le capteur thermique est constitué d'une résistance CTP ou d'une résistance CTN radiale.

Un avantage de l'appareil à griller conforme à l'invention réside dans la réalisation d'un support 40 pour le capteur thermique, souple et flexible, par l'intermédiaire de sa fixation sur une lame élastique 42, laquelle positionne le capteur thermique de manière optimale pour obtenir une image parfaite et instantanée de la température de la plaque de cuisson 30. Ainsi les dépassements d'un seuil de température liés à l'inertie thermique de l'ensemble, sont évités. Il est donc facilement concevable d'utiliser un bâti en matière plastique bas de gamme pour réaliser l'appareil à griller conforme à l'invention.

Un autre avantage de l'appareil à griller conforme à l'invention, réside dans l'utilisation de plaques de cuisson 30 et 31 amovibles, ce qui permet de les nettoyer très aisément après une cuisson.

Un avantage supplémentaire de l'appareil à griller conforme à l'invention est obtenu par l'intermédiaire d'une régulation fiable et précise en température afin de procéder à des cuissons successives d'articles alimentaires en n'altérant nullement la qualité de cuisson ou de grillage ou le temps de cuisson.

Un autre avantage de l'appareil à griller conforme à l'invention réside dans l'utilisation de matériels peu coûteux tels que du polypropylène ou des pièces métalliques de faible épaisseur pour réaliser l'appareil.

Un autre avantage de l'appareil à griller conforme à l'invention est obtenu par l'association d'éléments métalliques et d'éléments chauffants présentant une faible inertie thermique.

Un autre avantage de l'appareil à griller conforme à l'invention réside dans la maitrise des flux thermiques par des moyens structurels et fonctionnels simples, et peu coûteux, ledit appareil fonctionnant avec des performances optimales sans présenter de dangers d'utilisation vis à vis de l'utilisateur.

Un avantage supplémentaire de l'appareil à griller conforme à l'invention réside d'une part dans une dispersion réduite de la température de la plaque de cuisson 30, et d'autre part dans l'obtention d'un temps de préchauffe réduit à 2 minutes 15 secondes. En outre l'appareil à griller conforme à l'invention présente l'avantage de réduire le temps de réaction, après la pause d'aliments à griller sur la plaque de cuisson 30, à un temps compris entre 3 et 15 secondes, permettant de cette manière d'obtenir un gain de temps sur des cuissons longues telles que des côtes de boeuf ou steaks hachés par exemple, et surtout une amélioration du grillage des steaks dans le cas de cuissons successives.

## Revendications

1. Appareil à griller ou à cuire comportant un bâti en matériau plastique, au moins une plaque de cuisson (30) amovible sur laquelle repose l'article à griller, au moins un élément chauffant, au moins un réflecteur thermique (20) pour réfléchir vers la plaque de cuisson (30) les rayonnements infrarouges émis par l'élément chauffant, ainsi qu'un capteur thermique destiné à la régulation en température dudit appareil,
caractérisé en ce qu'une cuve (10) métallique est agencée sur le bâti pour d'une part supporter le réflecteur thermique (20), la plaque de cuisson (30) et l'élément chauffant et pour d'autre part réaliser avec le réflecteur thermique (20) et le bâti, un emboîtement dans lequel le réflecteur thermique (20) s'étend dans le volume interne défini par la cuve (10), laquelle réalise un réflecteur thermique supplémentaire, fixé sur le bâti à l'aide de moyens thermorésistants (6) et établissant des contacts mécaniques ponctuels avec la plaque de cuisson (30) et avec le réflecteur thermique (20) à l'aide respectivement de pièces de liaison (11) flexibles et moyens de fixation du type mâle/femelle

2. Appareil selon la revendication 1 caractérisé en ce que les pièces de liaison (11) flexibles sont fixées et réparties sur la périphérie de la cuve (10) pour réaliser une fixation mécanique stable de la plaque de cuisson (30) sur la cuve (10).

3. Appareil selon la revendication 1 ou 2 caractérisé en ce que les moyens de fixation du type mâle/femelle sont constitués d'ergots (21), répartis sur la périphérie externe du réflecteur thermique (20) et de fentes (15) ménagées dans la cuve (10) pour recevoir les ergots (21) lors de la mise en place du réflecteur thermique (20) sur la cuve (10).

4. Appareil selon l'une des revendications précédentes caractérisé en ce que la plaque de cuisson (30) est inclinée par construction dudit appareil, par rapport à une direction horizontale pour évacuer les jus issus de la cuisson.

5. Appareil selon l'une des revendications précédentes caractérisé en ce que le matériau constitutif du réflecteur thermique (20) présente une émissivité plus faible ou égale à l'émissivité du matériau constitutif de la cuve (10), vis à vis du rayonnement infrarouge.

6. Appareil selon l'une des revendications précédentes caractérisé en ce que le réflecteur thermique (20) est constitué d'un assemblage comprenant une tôle d'acier prise en sandwich entre deux tôles d'aluminium.

7. Appareil selon l'une des revendications précédentes caractérisé en ce que le réflecteur thermique (20) est réalisé en aluminium et présente une épaisseur inférieure ou égale à 0,6 millimètres.

8. Appareil selon l'une des revendications précédentes caractérisé en ce que les plaques de cuisson (30, 31) sont en aluminium et présentent une épaisseur inférieure ou égale à 2,5 millimètres.

9. Appareil selon l'une des revendications précédentes caractérisé en ce que les éléments chauffants sont constitués d'un tube réfractaire sur lequel ou dans lequel est agencé un filament résistif, lesdits éléments chauffants étant supportés par la cuve (10).

10. Appareil selon l'une des revendications précédentes caractérisé en ce que les plaques de cuisson (30, 31) sont recouvertes sur les surfaces en regard des éléments chauffants, d'une couche de matériau de forte émissivité vis à vis du rayonnement thermique émis par lesdits éléments chauffants.

11. Appareil conforme à l'une des revendications précédentes caractérisé en ce qu'il est constitué d'un gril-viande.

## Claims

1. A grilling or cooking appliance including a supporting structure made of plastics material, at least one removable cooking plate (30) on which the item to be grilled is placed, at least one heater element, at least one heat reflector (20) for reflecting towards the cooking plate (30) the infrared radiation that is emitted by the heater element, and a temperature sensor designed to regulate the temperature of said appliance,
the appliance being characterized in that a metal vessel (10) is fitted on the supporting structure, firstly to support the heat reflector (20), the cooking plate (30) and the heater element, and secondly to co-operate with the heat reflector (20) and the supporting structure to form an interlocking engagement in which the heat reflector (20) extends into the internal space defined by the vessel (10), which vessel forms an additional heat reflector that is fixed on the supporting structure using temperature-resistant means (6) and by establishing localized mechanical contacts with the cooking plate (30) and with the heat reflector (20) respectively by means of flexible connection parts (11) and fixing means of the male/female type.

2. An appliance according to claim 1, characterized in that the flexible connection parts (11) are fixed to and distributed around the periphery of the vessel (10) to provide stable mechanical fixing of the cooking plate (30) on the vessel (10).

3. An appliance according to claim 1 or 2, characterized in that the fixing means of the male/female type are constituted by projections (21) that are distributed around the outside periphery of the heat reflector (20) and by indentations (15) that are formed in the vessel (10) to receive the projections (21) when the heat reflector (20) is put in place on the vessel (10).

4. An appliance according to any preceding claim, characterized in that, by construction of said appliance, the cooking plate (30) is inclined relative to the horizontal in order to evacuate the juices produced during cooking.

5. An appliance according to any preceding claim, characterized in that, for infrared radiation, the material constituting the heat reflector (20) presents emissivity that is lower or equal to the emissivity of the material constituting the vessel (10).

6. An appliance according to any preceding claim, characterized in that the heat reflector (20) is constituted by an assembly comprising a steel sheet sandwiched between two aluminum sheets.

7. An appliance according to any preceding claim, characterized in that the heat reflector (20) is made of aluminum and is of thickness not greater than 0.6 mm.

8. An appliance according to any preceding claim, characterized in that the cooking plates (30, 31) are made of aluminum and are of thickness not greater than 2.5 mm.

9. An appliance according to any preceding claim, characterized in that each heater element is constituted by a refractory tube on which or in which a resistance filament is provided, said heater elements being supported by the vessel (10).

10. An appliance according to any preceding claim, characterized in that the cooking plates (30. 31) are covered on the surfaces facing the heater elements with a layer of material having high-emmisivity with regard to the heat radiation emitted by said heater elements.

11. An appliance according to any preceding claim, characterized in that it constitutes a meat grill.

## Patentansprüche

1. Grill- oder Bratgerät, mit einem Gestell aus Kunststoff, zumindest einer abnehmbaren Bratplatte (30), auf der das Grillstück aufliegt, zumindest einem Heizelement, zumindest einem Wärmereflektor (20) zum Reflektieren der von dem Heizelement abgestrahlten Infrarotstrahlung zur Bratplatte (30), sowie einem Temperaturfühler, der zur Temperaturregelung des Geräts dient,
dadurch gekennzeichnet, daß eine Wanne (10) aus Metall am Gestell angeordnet ist, um einerseits den Wärmereflektor (20), die Bratplatte (30) und das Heizelement abzustützen und um andererseits mit dem Wärmereflektor (20) und dem Gestell eine Einfassung zu bilden, in der sich der Wärmereflektor (20) in dem durch die Wanne (10) definierten Innenraum erstreckt, die einen zusätzlichen Wärmereflektor bildet, der durch hitzebeständige Mittel (6) am Gestell befestigt ist und durch biegsame Verbindungsteile (11) bzw. steckerartige Befestigungsmittel punktförmige mechanische Kontakte mit der Bratplatte (30) und dem Wärmereflektor (20) herstellt.

2. Gerät nach Anspruch 1, dadurch gekennzeichnet, daß die biegsamen Verbindungsteile (11) am Umfang der Wanne (10) befestigt und verteilt sind, um eine stabile mechanische Befestigung der Bratplatte (30) an der Wanne (10) zu bewirken.

3. Gerät nach Anspruch 1 oder 2, dadurch gekennzeichnet, daß die steckerartigen Befestigungsmittel aus am äußeren Umfang des Wärmereflektors (20) verteilt angeordneten Vorsprüngen (21) und aus Schlitzen (15) bestehen, die in der Wanne (10) vorgesehen sind, um die Vorsprünge (21) beim Aufsetzen des Wärmereflektors (20) auf die Wanne (10) aufzunehmen.

4. Gerät nach einem der vorhergehenden Ansprüche, dadurch gekennzeichnet, daß die Bratplatte (30) konstruktionsmäßig zur horizontalen Richtung geneigt ist, um die aus dem Bratvorgang stammenden Säfte abzuleiten.

5. Gerät nach einem der vorhergehenden Ansprüche, dadurch gekennzeichnet, daß der bauliche Werkstoff des Wärmereflektors (20) bezüglich der Infrarotstrahlung ein Emissionsvermögen aufweist, das niedriger oder gleich dem Emissionsvermögen des Werkstoffs der Wanne (10) ist.

6. Gerät nach einem der vorhergehenden Ansprüche, dadurch gekennzeichnet, daß der Wärmereflektor (20) aus einer Einheit mit einem sandwichartig zwischen zwei Aluminiumblechen aufgenommenen Stahlblech besteht.

7. Gerät nach einem der vorhergehenden Ansprüche, dadurch gekennzeichnet, daß der Wärmereflektor (20) aus Aluminium hergestellt ist und eine Dicke kleiner oder gleich 0,6 mm aufweist.

8. Gerät nach einem der vorhergehenden Ansprüche, dadurch gekennzeichnet, daß die Bratplatten (30, 31) aus Aluminium bestehen und eine Dicke kleiner oder gleich 2,5 mm aufweisen.

9. Gerät nach einem der vorhergehenden Ansprüche, dadurch gekennzeichnet, daß die Heizelemente aus einem hitzebeständigen Rohr bestehen, an dem oder in dem ein Widerstandsdraht angeordnet ist, wobei die Heizelemente durch die Wanne (10) abgestützt sind.

10. Gerät nach einem der vorhergehenden Ansprüche, dadurch gekennzeichnet, daß die Bratplatten (30, 31) an den den Heizelementen gegenüberliegenden Flächen mit einer Schicht überzogen sind, die aus einem Material mit starkem Emissionsvermögen bezüglich der Wärmeabstrahlung aus den Heizelementen besteht.

11. Gerät nach einem der vorhergehenden Ansprüche, dadurch gekennzeichnet, daß es ein Fleischgrillgerät ist.
